# EUROPÄISCHE PATENTSCHRIFT

(11) **EP 1 477 432 B1**
(45) Veröffentlichungstag und Bekanntmachung des Hinweises auf die Patenterteilung: **22.06.2005**
(21) Anmeldenummer: 04011652.7
(22) Anmeldetag: 17.05.2004
(51) Int. Cl.: B65G 15/52, B65G 15/42

(54) **Lattenförderband**
Slat conveyor
Convoyeur à lattes

(30) Priorität: 16.05.2003 DE 10322216
(43) Veröffentlichungstag der Anmeldung: 17.11.2004
(73) Patentinhaber: Georg Koinzer GmbH & Co. KG Spinnereibedarf, 36179 Bebra (DE)
(72) Erfinder: Koinzer, Gerald, 36251 Bad Hersfeld (DE)
(74) Vertreter: WALTHER, WALTHER & HINZ Patentanwälte

(56) Entgegenhaltungen:
- DE-A- 2 239 626
- DE-A- 3 445 125
- US-A- 6 105 758

## Beschreibung

Die vorliegende Erfindung betrifft ein Lattenförderband gemäß dem Oberbegriff des Anspruches 1.

Aus der DE 697 03 894 T2 (≡ US6 105 758) ist ein Stabband mit in Bandlöcher eingelassenen Stäben bekannt, bei dem die Flächen der Stabverbindungsabschnitte mit den Wänden der Bandlöcher, beispielsweise durch geeignete Klebemittel, bondiert werden. Ein solches Bondieren ist sehr aufwendig.

Zur Vermeidung des Bondierens und zur Vereinfachung der Fertigung von Lattenförderbändern ist aus der DE 34 45 125 C2 ein Lattenförderband bekannt, bei dem an einem Riemen eine Vielzahl von Halteelementen angebracht sind. Diese länglich ausgebildeten Halteelemente sind im Querschnitt pilzförmig ausgebildet und weisen rechts und links je einen Vorsprung auf, so dass in Längsrichtung gesehen rechts und links eine Rastkante entsteht. Dementsprechend ist die Latte an ihrer Unterseite konkav ausgebildet und weist dort ebenfalls in Längsrichtung rechts und links je eine Rastaufnahme auf, die im montierten Zustand den Rastvorsprung des Halteelementes hintergreift. Somit kann die Latte in einfacher Weise auf das Halteelement aufgeklipst werden. In der Praxis wird jede Latte auf mindestens zwei Halteelemente auf benachbarten Riemen aufgeklipst. Durch eine derartige Rastverbindung wird sichergestellt, dass die Latte nicht vom Riemen herabfallen kann, jedoch eine Sicherung gegen seitliches Verschieben wird hierdurch nicht erreicht. Aus diesem Grunde ist im DE 34 45 125 C2 vorgeschlagen, am Rastvorsprung noch eine Rastlippe auszubilden, die sich zwischen dem Rastvorsprung des Halteelementes und der Rastaufnahme der Latte verklemmt und somit auf Grund der vorhandenen Klemmung ein Verschieben der Latte auf dem Halteelement verhindert. In der Praxis hat sich jedoch herausgestellt, dass eine solche kraftschlüssige Sicherung gegen Verschieben der Latte auf Dauer nicht ausreichend ist, da die durch die Dichtlippe erzeugte Klemmspannung mit der Zeit nachlässt.

Davon ausgehend liegt der vorliegenden Erfindung die Aufgabe zu Grunde, ein Lattenförderband der eingangs genannten Art zu schaffen, bei dem die Latten auch nach langer Gebrauchszeit nicht verrutschen.

Als technische Lösung dieser Aufgabe wird erfindungsgemäß ein Lattenförderband gemäß den Merkmalen des Anspruches 1 vorgeschlagen. Vorteilhafte Weiterbildungen des Lattenförderbandes sind den Unteransprüchen zu entnehmen.

Ein nach dieser technischen Lösung ausgebildetes Lattenförderband hat den Vorteil, dass durch den Kleber eine stoffschlüssige Verbindung geschaffen wird, die ein Verrutschen der Latte entlang des Halteelementes dauerhaft verhindert. Dabei hat es sich als vorteilhaft erwiesen, einen Zwei-Komponenten-Kleber zu verwenden, da dieser auch nach dem Aushärten eine dauerhafte Klebeverbindung sicherstellt. Alternativ ist es ebenfalls vorteilhaft, einen unter Luftabschluss aushärtenden Kleber zu verwenden, da der Kleber selbst nach Aufsetzen der Latte auf das Halteelement wenig Berührung mit Außenluft hat. In einer bevorzugten Weiterbildung wird vorgeschlagen, an der Unterseite der Latte Aussparungen vorzusehen. Dies hat den Vorteil, dass ein Teil des Klebers durch die Aussparungen hindurchgelangt und hier nach Aushärten die Latte wie ein kleiner Zapfen hält. Hierdurch wird die stoffschlüssige Verbindung zwischen Latte und Halteelement durch eine quasi formschlüssige Verbindung ergänzt, so dass ein Verrutschen der Latte auf dem Halteelement dauerhaft verhindert wird.

In einer anderen, vorteilhaften Weiterbildung ist auf dem Halteelement eine plane Klebefläche ausgebildet, die korrespondierend zur Unterseite der Latte gestaltet ist. Hierdurch wird erreicht, dass der verbleibende Freiraum zwischen Halteelement und Latte gering ist, so dass mit nur einer geringen Menge des Klebers eine ausreichende Klebeverbindung erreicht wird. Somit wird der gewünschte Halteeffekt mit geringem Aufwand erreicht.

In noch einer anderen, bevorzugten Ausführungsform ist die Unterseite der Latte aufgeraut oder mit einer Prägung versehen. Dies hat den Vorteil, dass einzelne Moleküle des Klebers in die raue Oberfläche eindringen können bzw. in tiefe Stellen der Prägung gelangen können und somit eine bessere Verbindung zum Material schaffen, was die Klebekraft weiter erhöht.

In noch einer anderen bevorzugten Ausführungsform ist die Oberseite der Latte teilweise aus Weich-PVC gebildet. Dies hat den Vorteil, dass das zu transportierende Gut auf dem Lattenförderband besser haftet und somit bessere Mitnahmeeffekte entstehen.

In einer anderen, bevorzugten Ausführungsform ist der Kleber als Volumenkleber ausgebildet. Dies hat den Vorteil, dass der Kleber beim Aushärten sein Volumen vergrößert und somit in ausgehärtetem Zustand die Latte gegen das Halteelement verspannt. Somit wird zusätzlich zum Stoffschluss zwischen Kleber und Latte einerseits und zwischen Kleber und Halteelement andererseits ein Kraftschluss zwischen Latte und Halteelement erzeugt, so dass ein Verrutschen der Latte zuverlässig verhindert wird.

In einer bevorzugten Weiterbildung wird als volumenvergrößernder Kleber ein doppelseitiges Klebeband eingesetzt, bei dem mindestens eine Klebefläche auf Polyurethan (PU) - Basis gebildet ist. Dies hat den Vorteil, dass sich der PU-Schaum beim Andrücken der Latte ausdehnt und aufgrund des größeren Volumens eine Vorspannung zwischen Klebeband und Latte, respektive zwischen Klebeband und Halteelement (oder zwischen beiden) erzeugt.

Weitere Vorteile des erfindungsgemäßen Lattenförderbandes ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Explosionsdarstellung des erfindungsgemäßen Lattenförderbandes;
- Fig. 2: eine teilweise geschnitten dargestellte, perspektivische Ansicht einer Latte des Lattenförderbandes gemäß Fig. 1;
- Fig. 3a: eine Seitenansicht eines Ausschnittes des Lattenförderbandes gemäß Fig.1;
- Fig. 3b: eine Frontansicht eines Ausschnittes des Lattenförderbandes gemäß Fig. 1;
- Fig. 4a: eine Frontansicht der Latte gemäß Fig. 2;
- Fig. 4b: eine Unteransicht der Latte gemäß Fig. 2.

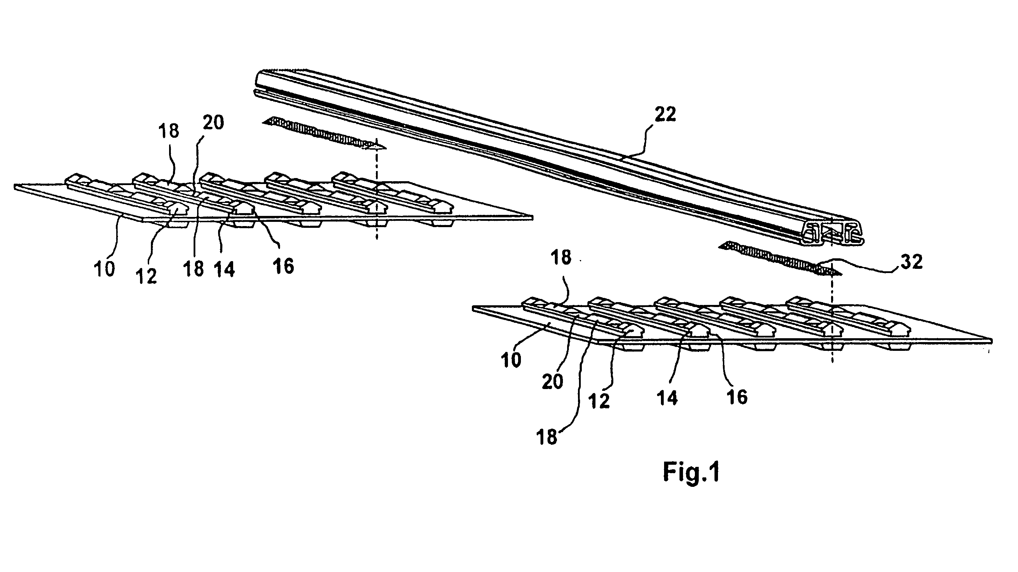

In den Figuren 1 bis 4b ist ein erfindungsgemäßes Lattenförderband dargestellt, welches zwei Riemen 10 umfasst, auf denen eine Vielzahl von Haltelementen 12 angebracht sind. Diese Halteelemente 12 sind im Querschnitt pilzartig ausgebildet und weisen rechts und links einen sich um die Länge des Haltelementes 12 erstreckenden Rastvorsprung 14, 16 auf. Die Oberseite der Halteelemente 12 ist mittig spitz zulaufend ausgebildet und weist rechts und links eben ausgebildete, plane Klebeflächen 18 auf. Zwischen den schräg angeordneten Klebeflächen 18 sind Freiflächen 20 vorgesehen.

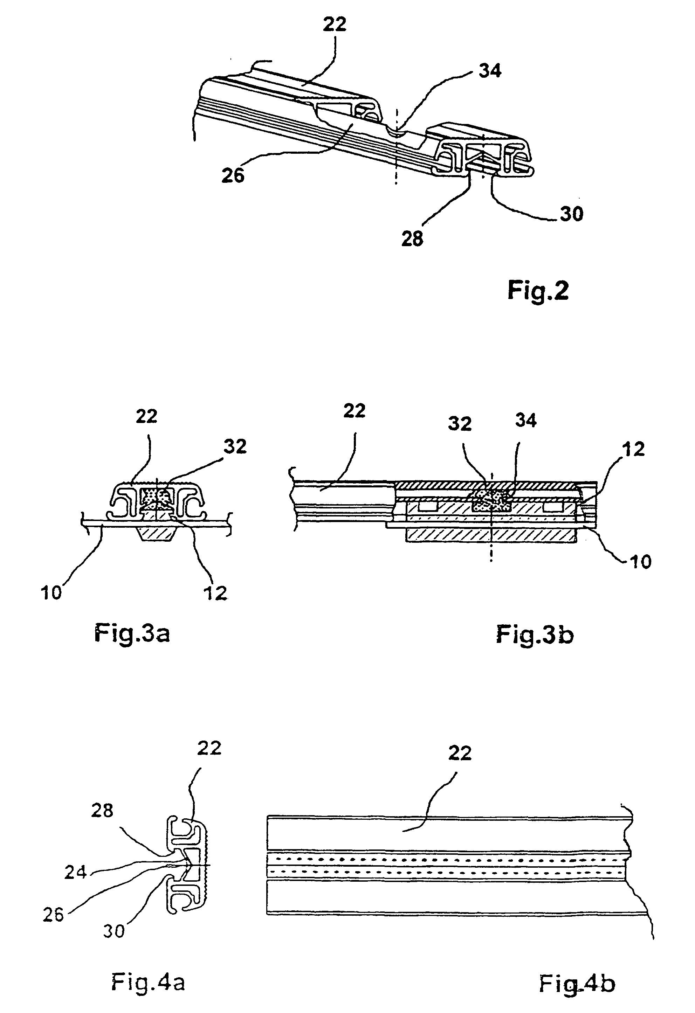

Auf die Halteelemente 12 wird eine Latte 22 aufgeklipst. Wie insbesondere Figur 4a zu entnehmen ist, ist die Latte 22 an ihrer Unterseite 24 korrespondierend zu den Klebeflächen 18 ausgebildet und weist dort ebenfalls schräg angeordnete Klebeflächen 26 auf. Des Weiteren ist an der Unterseite 24 der Latte 22 eine rechte und eine linke Rastaufnahme 28, 30 ausgebildet, die im montierten Zustand den Rastvorsprung 14, 16 umgreift und somit die Latte 22 formschlüssig an dem Halteelement 12 hält, so dass die Latte 22 nicht vom Lattenförderband abfallen kann.

Zur seitlichen Fixierung der Latte 22 an den Halteelementen 12 wird diese festgeklebt. Dabei wird insbesondere auf die Klebeflächen 18 und 26 ein Kleber 32 aufgetragen, bevor die Latte 22 in die jeweiligen Halteelemente 12 eingeklipst wird, so dass der Kleber nach seinem Aushärten die Latte 22 auch gegen seitliches Verschieben sichert. Dabei hat es sich als vorteilhaft erwiesen, einen Zwei-Komponenten-Kleber zu verwenden, da dieser gut materialverträglich ist und gute Langzeitklebeeigenschaften aufweist. Alternativ kann aber auch ein anderer, unter Luftabschluss aushärtender Kleber eingesetzt werden.

Um die Klebeverbindung weiterhin zu verbessern, sind in der Unterseite 24 der Latte 22 Aussparungen 34 vorgesehen, durch die ein Teil des Klebers 32 hindurchtreten kann, wie beispielsweise in Figur 3b ersichtlich ist. Nach dem Aushärten bildet dieser Kleber eine Art Pfropfen und verhindert so aus formschlüssige Art und Weise ein seitliches Verschieben der Latte 22 gegenüber den Halteelementen 12. Wie ebenfalls aus Figur 3b ersichtlich ist, wird diese Aussparung 34 im Bereich der Freifläche 20 des Halteelementes 12 angesiedelt. Alternativ kann die Aussparung aber auch im Bereich der Klebefläche 18 angeordnet sein.

Wie insbesondere Figur 4b zu entnehmen ist, ist die Klebefläche 26 der Unterseite 24 der Latte 22 mit einer Prägung versehen, die beispielsweise durch eine Vielzahl von Nadelstichen oder dergleichen erreicht wird. Durch eine derart aufgeraute Oberfläche hat der Kleber 32 gute Anbindungsmöglichkeiten an das Material der Latte 22 und erhöht somit die Klebeverbindung. Alternativ kann die Klebefläche 26 aber auch beispielsweise mit Schmirgelpapier oder anderen geeigneten Mitteln aufgeraut werden.

Die Oberseite der Latte 22 ist mit einem Weich - PVC belegt. Dies bewirkt, dass das zu transportierende Material besser an den Latten haftet und somit besser mitgenommen wird, da sich durch das Weich - PVC die Reibung zwischen Latte 22 und dem vorzugsweise textilen Material erhöht.

### Bezugszeichenliste:

- 10: Riemen
- 12: Halteelement
- 14: Rastvorsprung
- 16: Rastvorsprung
- 18: Klebefläche
- 20: Freifläche
- 22: Latte
- 24: Unterseite
- 26: Klebefläche
- 28: Rastaufnahme
- 30: Rastaufnahme
- 32: Kleber
- 34: Aussparung

## Patentansprüche

1. Lattenförderband mit mindestens einem Riemen (10) an dem mindestens ein Halteelement (12) angebracht ist und mit mindestens einer an mindestens einem Halteelement (12) angebrachten Latte (22), wobei am Halteelement (12) ein Rastvorsprung (14, 16) ausgebildet ist, und wobei an einer dem Halteelement (12) zugewandten Unterseite (24) der Latte (22) eine Rastaufnahme (28, 30) ausgebildet ist, mit der die Latte (22) am Halteelement (12) eingerastet ist,
**dadurch gekennzeichnet,**
**dass** die Latte (22) mit einem Kleber (32) gegen Verrutschen gesichert ist.

2. Lattenförderband nach Anspruch 1,
**dadurch gekennzeichnet,**
**dass** der Kleber (32) ein Zwei-Komponenten-Kleber oder ein unter Luftabschluss aushärtender Kleber ist.

3. Lattenförderband nach wenigstens einem der vorangehenden Ansprüche,
**dadurch gekennzeichnet,**
**dass** an der Unterseite (24) der Latte (22) Aussparungen (34) vorgesehen sind, durch die ein Teil des Klebers (32) hindurchtritt, sobald die Latte (22) am Halteelement (12) eingerastet ist.

4. Lattenförderband nach wenigstens einem der vorangehenden Ansprüche,
**dadurch gekennzeichnet,**
**dass** am Halteelement (12) eine plane Klebefläche (18) zur Aufnahme des Klebers (32) ausgebildet ist, wobei die Klebefläche (18) korrespondierend zur Unterseite (24) der Latte (22) ausgebildet ist.

5. Lattenförderband nach wenigstens einem der vorangehenden Ansprüche,
**dadurch gekennzeichnet,**
**dass** die Unterseite (24) der Latte (22) eine aufgeraute oder eine mit einer Prägung versehene Oberfläche aufweist.

6. Lattenförderband nach wenigstens einem der vorangehenden Ansprüche,
**dadurch gekennzeichnet,**
**dass** eine Oberseite der Latte (22) zumindest teilweise eine Oberfläche aus Weich-PVC besitzt.

7. Lattenförderband nach wenigstens einem der vorangehenden Ansprüche,
**dadurch gekennzeichnet,**
**dass** der Kleber (32) als Volumen vergrößender Kleber ausgebildet ist.

8. Lattenförderband nach Anspruch 7,
**dadurch gekennzeichnet,**
**dass** der Kleber (32) als doppelseitiges Klebeband ausgebildet ist, wobei mindestens eine Klebefläche des Klebebandes auf PU-Basis gebildet ist.

## Claims

1. A slat conveyor with at least one belt (10) to which at least one holding element (12) is attached and with at least one slat (22) attached to at least one holding element (12), a detent lug (14, 16) being formed on said holding element (12) and a detent lug receiving cutout (28, 30), by means of which said slat (22) is engaged with said holding element (12), being formed in an underside (24) of said slat (22) that is turned toward said holding element (12),
**characterized in**
**that** said slat (22) is secured from displacement by means of an adhesive (32).

2. The slat conveyor as set forth in claim 1,
**characterized in**
**that** the adhesive (32) is a two-component adhesive or an anaerobic curing adhesive.

3. The slat conveyor as set forth in at least one of the afore mentioned claims,
**characterized in**
**that** on the underside (24) of the slat (22) there are provided recesses (34) through which part of the adhesive (32) passes as soon as the slat (22) is engaged with the holding element (12).

4. The slat conveyor as set forth in at least one of the afore mentioned claims,
**characterized in**
**that** a planar adhesive surface (12) for receiving the adhesive (32) is formed on the holding element (12), said adhesive surface (18) being configured to mate with the underside (24) of the slat (22).

5. The slat conveyor as set forth in at least one of the afore mentioned claims,
**characterized in**
**that** the underside (24) of the slat (22) comprises a surface that has been roughened or into which an impression has been formed.

6. The slat conveyor as set forth in at least one of the afore mentioned claims,
**characterized in**
**that** a top side of the slat (22) possesses at least partially a surface made from soft PVC.

7. The slat conveyor as set forth in at least one of the afore mentioned claims,
**characterized in**
**that** the adhesive (32) is configured to be a volume increasing adhesive.

8. The slat conveyor as set forth in claim 7,
**characterized in**
**that** the adhesive (32) is configured to be a double-sided adhesive tape, with at least one adhesive surface of the adhesive tape being formed on a PU basis.

## Revendications

1. Convoyeur à lattes avec au moins une courroie (10) à laquelle est attaché au moins un élément de retenue (12) et avec au moins une latte (22) attachée à au moins un élément de retenue (12), un élément d'encliquetage en saillie (14,16) étant formé sur l'élément de retenue (12) et un logement (28, 30) recevant l'élément d'encliquetage en saillie et par lequel la latte (22) est encliquetée dans l'élément de retenue (12) étant pratiqué dans la face inférieure (24) de la latte (22) tournée vers l'élément de retenue (12),
**caractérisé en ce**
**que** la latte (22) est maintenue en place par une colle (32).

2. Convoyeur à lattes selon la revendication 1,
**caractérisé en ce**
**que** la colle (32) est une colle à deux composants ou une colle anaérobique.

3. Convoyeur à lattes selon une au moins des revendications précédentes,
**caractérisé en ce**
**que** des évidements (34) sont prévus sur la face inférieure (24) de la latte (22), ces évidements permettant le passage d'une partie de la colle (32) dès que la latte (22) est encliquetée sur l'élément de retenue (12).

4. Convoyeur à lattes selon une au moins des revendications précédentes,
**caractérisé en ce**
**qu'**une surface adhésive (18) plane destinée à recevoir la colle (32) est formée sur l'élément de retenue (12), la surface adhésive (18) ayant une forme correspondant à la face inférieure (24) de la latte (22).

5. Convoyeur à lattes selon une au moins des revendications précédentes,
**caractérisé en ce**
**que** la face inférieure (24) de la latte (22) comporte une surface rendue rugueuse ou munie d'un relief au repoussé.

6. Convoyeur à lattes selon une au moins des revendications précédentes,
**caractérisé en ce**
**qu'**une face supérieure de la latte possède du moins en partie une surface en PVC mou.

7. Convoyeur à lattes selon une au moins des revendications précédentes,
**caractérisé en ce**
**que** la colle (32) est conformée en forme de colle augmentant de volume.

8. Convoyeur à lattes selon la revendication 7,
**caractérisé en ce**
**que** la colle (32) est conformée en forme de bande adhésive double face, au moins une surface adhésive de la bande adhésive étant réalisée à partir de PU.
